# EUROPEAN PATENT APPLICATION

(11) **EP 4 701 232 A1**
(43) Date of publication of application: **25.02.2026**
(21) Application number: 23933995.5
(22) Date of filing: 18.04.2023
(51) Int. Cl.: H04R 3/04, G10K 15/00

(54) **RESONANT FREQUENCY IDENTIFICATION METHOD, PROGRAM, AND RESONANT FREQUENCY IDENTIFICATION SYSTEM**

(71) Applicant: Toa Corporation, Kobe-Shi, Hyogo 650-0046 (JP)
(72) Inventor: HIGASHIHARA, Daisuke, Kobe-shi, Hyogo 650-0046 (JP)
(74) Representative: Global IP Europe Patentanwaltskanzlei
(86) International application number: PCT/JP2023/015427
(87) International publication number: WO 2024/218848

(57) **Abstract**

To appropriately identify a resonant frequency when a broadcast sound is broadcasted, a resonant frequency identification method includes broadcasting a broadcast sound toward a predetermined space (SP), measuring sound pressure of the broadcast sound broadcasted toward the predetermined space (SP), and identifying that a resonant frequency in the predetermined space (SP) exists within a specific frequency band, if a change of the measured sound pressure in the specific frequency band is different from a change of sound pressure in a case where there is no resonance in the predetermined space (SP).

## Description

### TECHNICAL FIELD

The present disclosure relates to a method of identifying a resonant frequency of a space in which a broadcasting facility is installed, a program causing a computer to perform the method, and a system configured to identify a resonant frequency of a space in which broadcasting facility is installed.

### BACKGROUND ART

For instance, audio facility such as a speaker is installed in a predetermined space such as a hall or a gymnasium, and various sounds (referred to as broadcast sounds) are broadcasted from the audio facility toward the predetermined space. When the audio facility broadcasts the broadcast sounds toward the predetermined space, the broadcast sound produced from the audio facility and a reflection sound from an object in the predetermined space may be combined, and a standing wave having an amplitude larger than that of the broadcast sound may be produced in the predetermined space. This phenomenon is called "resonance", and a frequency of the standing wave produced by the resonance is called a resonant frequency. This resonant frequency is determined by a structure or the like of the predetermined space in which the audio facility is installed.

The resonance phenomenon is a phenomenon that particularly makes a sound having a specific frequency louder, and hence causes a phenomenon that increases sound pressure in the specific frequency (resonant frequency) band contained in the broadcast sound, such as sounding like "won won" or "fan fan". If the resonance phenomenon occurs during broadcasting the broadcast sound, the broadcast sound becomes unclear, and the broadcast sound may hardly be heard.

In order to prevent occurrence of the resonance phenomenon during broadcasting the broadcast sound, it is performed to detect the resonant frequency in the predetermined space in which the audio facility is installed (see, for example, Patent Citation 1). If the resonant frequency in the predetermined space can be specified, the broadcast sound to be broadcasted can be heard more easily, by adjusting an equalizer of the audio facility to control the sound component having the specified resonant frequency not to be excessively large.

### PRIOR ART CITATIONS

### PATENT CITATION

Patent Citation 1: Japanese Patent No. 3920226

### SUMMARY OF INVENTION

The resonant frequency changes depending on not only the structure of the predetermined space in which the audio facility is installed, but also a state of the predetermined space (e.g., temperature, humidity, the number of people in the predetermined space, clothing of the people, or the like). Such the state of the predetermined space is easily changed, and hence the resonant frequency of the predetermined space is also easily changed.

Conventionally, the resonant frequency is specified by producing a special sound from the audio facility at specific timing, such as when installing the audio facility. For this reason, the resonance phenomenon may not be able to be suppressed when the broadcast sound is broadcasted. It is because the resonant frequency specified at the specific timing may be different from the resonant frequency when the broadcast sound is broadcasted, and hence the setting of the equalizer based on the resonant frequency specified at the specific timing may not be optimum for suppressing the resonance phenomenon when the broadcast sound is broadcasted.

It is an object of the present disclosure to appropriately specify the resonant frequency of the predetermined space in which the audio facility is installed, when the broadcast sound is broadcasted.

A method of identifying a resonant frequency according to one aspect of the present disclosure includes:
broadcasting a broadcast sound toward a predetermined space whose resonant frequency is to be identified;
measuring sound pressure of the broadcast sound broadcasted toward the predetermined space; and
identifying that a resonant frequency in the predetermined space exists within a specific frequency band, if a change of the measured sound pressure in the specific frequency band is different from a change of sound pressure in the case where there is no resonance in the predetermined space.

According to another aspect of the present disclosure, a program causing a computer to perform the above method of identifying a resonant frequency.

According to still another aspect of the present disclosure, a resonant frequency identification system includes a broadcast facility, a speaker, and a broadcast sound collecting microphone. The broadcast facility is a facility configured to broadcast a broadcast sound toward the predetermined space. The speaker is installed in the predetermined space, to broadcast the broadcast sound output from the broadcast facility to the predetermined space. The broadcast sound collecting microphone collects the broadcast sound broadcasted toward the predetermined space.

In the resonant frequency identification system described above, the broadcast facility measures sound pressure of the broadcast sound collected by the broadcast sound collecting microphone, during broadcasting the broadcast sound from the speaker toward the predetermined space, and identifies that a resonant frequency in the predetermined space exists within the specific frequency band, if a change of the measured sound pressure in the specific frequency band is different from a change of sound pressure in the case where there is no resonance in the predetermined space.

The resonant frequency identification method, the program, and the resonant frequency identification system according to the present disclosure identify the resonant frequency using the broadcast sound that is broadcasted toward the predetermined space in an ordinary use, and hence it is possible to appropriately identify the resonant frequency of the predetermined space when the broadcast sound is actually broadcasted.

### BRIEF DESCRIPTION OF DRAWINGS

Fig. 1 is a diagram illustrating a configuration of a resonant frequency identification system.
Fig. 2 is a diagram illustrating a configuration of a broadcast facility.
Fig. 3 is a diagram illustrating a functional configuration of a DSP.
Fig. 4 is a flowchart illustrating a resonant frequency identification method according to an identification method 1.
Fig. 5 is a flowchart illustrating a resonant frequency identification method according to an identification method 2.

### DESCRIPTION OF EMBODIMENTS

### 1. Embodiment 1

### 1-1. Outline of Resonant Frequency Identification System

Hereinafter, a resonant frequency identification system 100 is described. The resonant frequency identification system 100 identifies a resonant frequency of resonance when a sound is produced in a predetermined space SP (e.g., a concert hall, a gymnasium, a commercial facility, a playground, or the like). The resonant frequency identification system 100 identifies a resonant frequency, using a sound broadcasted toward the predetermined space SP in an ordinary use (referred to as a broadcast sound). In this way, the resonant frequency identification system 100 can identify the resonant frequency in accordance with a change of a state of the predetermined space SP (temperature, humidity, the number of people in the predetermined space, clothing of the people, or the like).

### 1-2. Configuration of Resonant Frequency Identification System

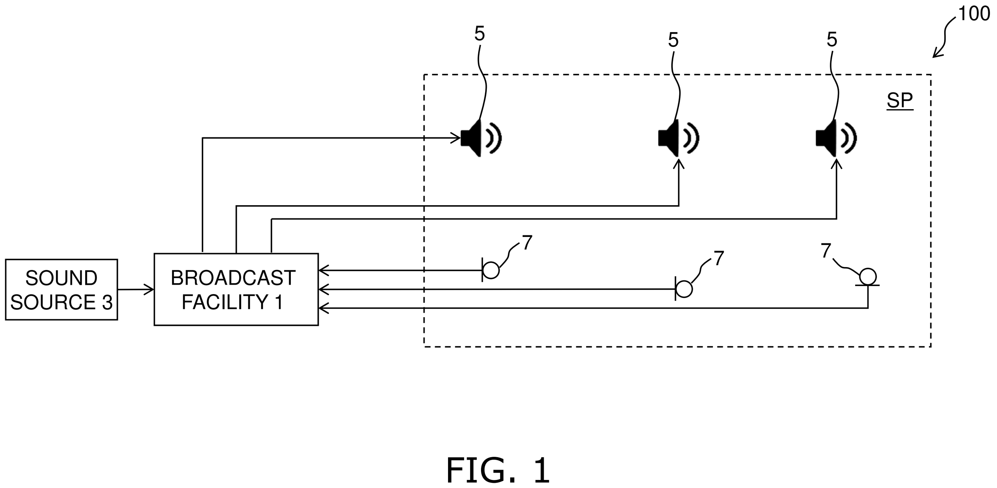

With reference to Fig. 1, the resonant frequency identification system 100 is described. Fig. 1 is a diagram illustrating a configuration of the resonant frequency identification system 100. As illustrated in Fig. 1, the resonant frequency identification system 100 includes broadcast facility 1.

The broadcast facility 1 is a facility that broadcasts the broadcast sound provided from a sound source 3. The sound source 3 is, for example, a reproduction device that outputs sound data recorded on a recording medium such as a record disc, tape, a CD, or a DVD, a loudspeaker, a facility that is connected via an HDMI (registered trademark) interface, a USB interface, Bluetooth (registered trademark), or the like to output sound data, a personal computer, a smart device, a network audio device or a microphone connected to the broadcast facility 1 via a network, or the like. The sound source 3 can output, for example, BGM, sound contents, streaming data, or a combination thereof as the broadcast sound.

The sound contents may be Japanese sound contents, or may be sound contents of other language. If there are Japanese sound contents and sound contents of other language which are the same in content, the sound source 3 may broadcast the sound contents of other language together with Japanese sound contents. In addition, the sound source 3 may have a function for translating Japanese sound contents into other language, and/or a function for translating the sound contents of other language into Japanese.

The broadcast facility 1 is connected to a speaker 5. The speaker 5 is installed on ceiling of the predetermined space SP or on a wall of the predetermined space SP, for example. Note that in this embodiment, a plurality of the speakers 5 are installed in the predetermined space SP. The number of the speakers 5 is not limited to plurality, but one speaker 5 may be installed in the predetermined space SP. The broadcast facility 1 outputs the broadcast sound provided from the sound source 3 to the speaker 5 to broadcast the broadcast sound toward the predetermined space SP.

The broadcast facility 1 is connected to a broadcast sound collecting microphone 7. The broadcast sound collecting microphone 7 collects the broadcast sound broadcasted toward the predetermined space SP. The broadcast sound collecting microphone 7 is installed at each of a plurality of positions in the predetermined space SP. By installing the broadcast sound collecting microphones 7 in a plurality of positions, it is possible to detect whether or not resonance is generated in the entire of the predetermined space SP. It is preferred that the broadcast sound collecting microphone 7 can collect sounds in the frequency band (20 Hz to 20 kHz) that human can hear.

### 1-3. Configuration of Broadcast Facility

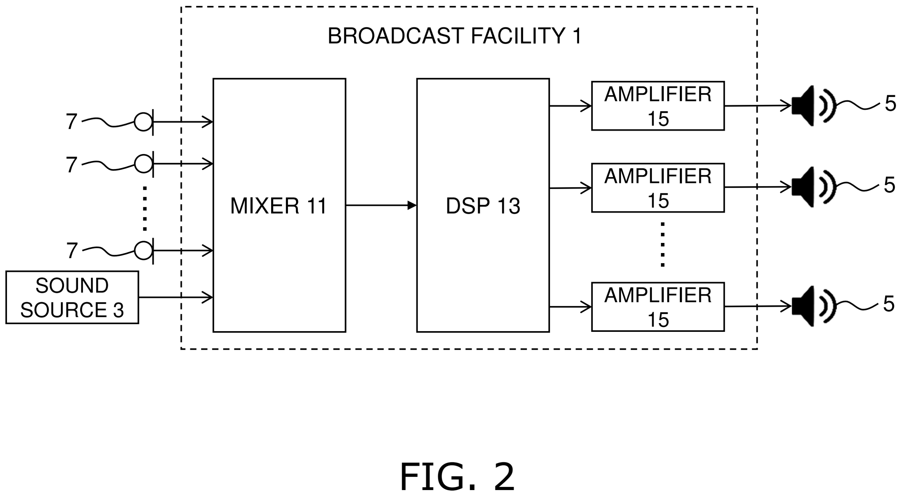

Hereinafter, with reference to Fig. 2, a configuration of the broadcast facility 1 is described. Fig. 2 is a diagram illustrating a configuration of the broadcast facility 1. The broadcast facility 1 includes a mixer 11, a digital signal processor (hereinafter, referred to as a DSP 13), and an amplifier 15.

The mixer 11 outputs a broadcast sound signal generated by mixing sounds output from the sound source 3 and a measurement signal of the broadcast sound collected by the broadcast sound collecting microphone 7 to the DSP 13. The broadcast sound signal and the measurement signal are output from different output channels of the mixer 11. The mixer 11 can output only the measurement signal of the broadcast sound collected by any one of the plurality of broadcast sound collecting microphones 7.

The DSP 13 includes a circuit that performs predetermined information processing about the broadcast sound input from the mixer 11. Specifically, the DSP 13 identifies a resonant frequency in the predetermined space SP, using the measurement signal input from the mixer 11 (i.e., the broadcast sound collected by the broadcast sound collecting microphone 7). The DSP 13 adjusts frequency characteristics of the broadcast sound output from the DSP 13, based on the identified resonant frequency. Specifically, the DSP 13 adjusts frequency characteristics for the broadcast sound signal input from the mixer 11 (i.e., the broadcast sound produced using the sound source 3), and then outputs the broadcast sound signal after adjusting frequency characteristics to the amplifier 15. The amplifier 15 amplifies the broadcast sound signal output from the DSP 13 to output the same to the speaker 5. In this way, the speaker 5 can broadcast the broadcast sound after amplifying the broadcast sound signal toward the predetermined space SP.

### 1-4. Functional Configuration of DSP

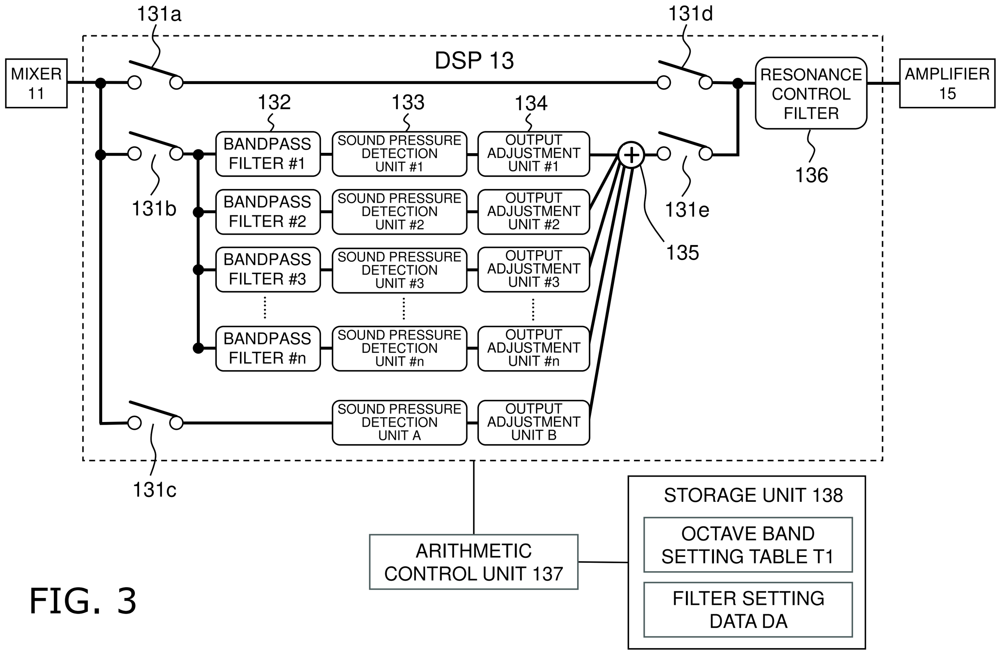

Hereinafter, with reference to Fig. 3, a functional configuration of the DSP 13 is described. Fig. 3 is a diagram illustrating a functional configuration of the DSP 13. A part of the functional configuration described below may be realized by hardware constituting the DSP 13, while the other part of the functional configuration may be realized by software, i.e., a program executed in the DSP 13. This program may be stored in a storage unit of the DSP 13 or the like. In addition, it may also be possible to realize the entire of the functional configuration described below by hardware constituting the DSP 13, or to realize the same by software, i.e., a program executed in the DSP 13.

The DSP 13 includes switch units 131a to 131e, a bandpass filter unit 132, a sound pressure detection unit 133, an output adjustment unit 134, an adder unit 135, a resonance control filter unit 136, an arithmetic control unit 137, and a storage unit 138.

The switch units 131a to 131e determines a transmission path in the DSP 13 for the signal input from the mixer 11. Specifically, by turning on the switch unit 131a and the switch unit 131d, the signal input from the mixer 11 can pass through the resonance control filter unit 136 and can be output to the amplifier 15.

By turning on the switch unit 131b and the switch unit 131e, the measurement signal input from the mixer 11, i.e., the broadcast sound collected by the broadcast sound collecting microphone 7 is divided by the bandpass filter unit 132 into predetermined frequency bands, so that the sound pressure detection unit 133 (sound pressure detection units #1 to #n) can detect sound pressures of the broadcast sounds in the predetermined frequency bands, respectively.

In addition, with the output adjustment unit 134 (output adjustment units #1 to #n), the broadcast sound signal input from the mixer 11, i.e., the broadcast sound generated from sounds of the sound source 3 is divided into the predetermined frequency bands by the bandpass filter unit 132, and sound pressure of the broadcast sound can be adjusted for each predetermined frequency band. Further, the broadcast sound signals after passing through the bandpass filter unit 132, the sound pressure detection unit 133, and the output adjustment unit 134 can pass through the resonance control filter unit 136 and can be output to the amplifier 15.

By turning on the switch unit 131c and the switch unit 131e, a sound pressure detection unit A can measure the sound pressure of the entire of the broadcast sound collected by the broadcast sound collecting microphone 7. In addition, an output adjustment unit B can adjust the output amount of the broadcast sound generated from sounds of the sound source 3. Further, the broadcast sound after passing through the sound pressure detection unit A and the output adjustment unit B can pass through the resonance control filter unit 136 and can be output to the amplifier 15.

The bandpass filter unit 132 extracts a sound component in a predetermined frequency band from the broadcast sound signal input from the mixer 11 (the broadcast sound generated using the sound source 3), or from the measurement signal (the broadcast sound collected by the broadcast sound collecting microphone 7). Specifically, the bandpass filter unit 132 includes a plurality of bandpass filters (bandpass filters #1 to #n). In this embodiment, the bandpass filter is a 1/m octave band filter (m is an arbitrary positive integer). The 1/m octave band filter is an band filter in which a relationship f2 = 2^{1/m}*f1 holds, where f1 is a lower limit cutoff frequency of the octave band filter, and f2 is an upper limit cutoff frequency. In other words, the 1/m octave band filter means a bandpass filter that passes sound components in the range of f1 to 2^{1/m}*f1.

A bandwidth of the bandpass filter is preferably, for example, a width corresponding to 1/3 octave band to 1/48 octave band (i.e., a value of m described above is in the range of 3 to 48), and is more preferably a width corresponding to 1/12 octave band to 1/24 octave (i.e., a value of m described above is in the range of 12 to 24). If the bandwidth of the bandpass filter is larger than a width corresponding to 1/3 octave band, the broadcast sound changes excessively so that the quality may be deteriorated. On the other hand, if the bandwidth of the bandpass filter is smaller than 1/48 octave, time for extracting the sound pressures of all the frequency bands contained in the broadcast sound is increased. By setting the bandwidth of one bandpass filter to the width described above, the sound pressures of all the frequency bands contained in the broadcast sound can be obtained at high speed without affecting the quality of the broadcast sound.

In the following description, the "k-th octave band (k = 1, 2, ... n)" means the frequency band of the sound component allowed to pass through the bandpass filter #k of the bandpass filter unit 132. Specifically, a relationship fₖ₊₁/fₖ = 2^{1/m} holds, where fₖ is the lower limit cutoff frequency of the bandpass filter #k, and fₖ₊₁ is the upper limit cutoff frequency.

The lower limit cutoff frequency, the upper limit cutoff frequency, and the center frequency of each bandpass filter included in the bandpass filter unit 132 are defined in advance at least in the range of the sound frequency band (20 Hz to 20 kHz), and are stored in an octave band setting table T1, for example. The octave band setting table T1 can be stored in the storage unit 138, for example.

The sound pressure detection unit 133 is connected to each of the bandpass filters of the bandpass filter unit 132 (sound pressure detection unit #1 to sound pressure detection unit #n). The sound pressure detection unit 133 measures sound pressure of the sound component that has passed through each bandpass filter of the bandpass filter unit 132. Specifically, a k-th sound pressure detection unit 133 (sound pressure detection unit #k) measures sound pressure of the sound component in the k-th octave band included in the measurement signal input from the mixer 11, i.e., the broadcast sound collected by the broadcast sound collecting microphone 7. The sound pressure detection unit A connected to the switch unit 131c measures sound pressure of the entire broadcast sound collected by the broadcast sound collecting microphone 7.

The output adjustment unit 134 is connected to each bandpass filter of the bandpass filter unit 132 via the sound pressure detection unit 133 described above (output adjustment unit #1 to output adjustment unit #n). The output adjustment unit 134 adjusts output level of the sound component that has been passed through each bandpass filter of the bandpass filter unit 132. Specifically, the k-th output adjustment unit 134 (output adjustment unit #k) adjusts output level of the sound component in the k-th octave band included in the broadcast sound signal input from the mixer 11, i.e., the broadcast sound generated using sounds of the sound source 3. The output adjustment unit B connected to the switch unit 131c via the sound pressure detection unit A adjusts output level of the entire broadcast sound generated using sounds of the sound source 3.

The adder unit 135 adds outputs of the individual output adjustment units 134 (output adjustment unit #1 to output adjustment unit #n) to generate a sound signal after adjusting output level of the sound component in a specific octave band, and outputs the sound signal. In addition, the adder unit 135 outputs the sound signal after passing through the output adjustment unit B.

The resonance control filter unit 136 is an equalizer, which adjusts output level of each frequency band of the broadcast sound signal input from the mixer 11 (i.e., the broadcast sound produced using the sound source 3), so that a resonance of the broadcast sound will not occur in the predetermined space SP. The resonance control filter unit 136 adjusts output level of each frequency band of the broadcast sound signal input from the mixer 11, in accordance with filter setting data DA stored in the storage unit 138, for example. In other words, the filter setting data DA is set so as to suppress resonance in the predetermined space SP.

The arithmetic control unit 137 performs various information processing and control of the DSP 13. The arithmetic control unit 137 controls the switch units 131a to 131e to select functions to be performed in the DSP 13. The arithmetic control unit 137 adjusts filter characteristics of the bandpass filter unit 132, in accordance with the octave band setting table T1 stored in the storage unit 138. In addition, the arithmetic control unit 137 adjusts characteristics of the resonance control filter unit 136 in accordance with the filter setting data DA.

The arithmetic control unit 137 obtains sound pressure of the sound component in the specific octave band included in the broadcast sound collected by the broadcast sound collecting microphone 7, from the sound pressure detection unit 133 or the sound pressure detection unit A. The arithmetic control unit 137 identifies a resonant frequency of the predetermined space SP using the obtained sound pressure.

In addition, the arithmetic control unit 137 controls the output adjustment unit 134 or the output adjustment unit B to adjust output level of the sound component in the specific octave band included in the broadcast sound produced using the sound source 3, and outputs the same to the speaker 5 via the amplifier 15.

The storage unit 138 stores various parameters necessary for the program to be executed by the DSP 13 or information processing in the DSP 13. Specifically, the storage unit 138 stores the octave band setting table T1 and the filter setting data DA described above. In addition, the storage unit 138 functions as a buffer for temporarily storing sound pressure obtained using the sound pressure detection unit 133.

### 1-5. Resonant Frequency Identification Method

### 1-5-1. Identification Method 1

Hereinafter, described is a method of identifying a resonant frequency in the predetermined space SP toward which the broadcast sound is broadcasted, using the resonant frequency identification system 100 having the configuration described above. As the method of identifying a resonant frequency, there are (i) a method of identifying a resonant frequency by broadcasting the broadcast sound in a state where sound pressure in the specific frequency band is increased than usual, and identifying based on a change of sound pressure in the specific frequency band, and (ii) a method of identifying a resonant frequency by broadcasting the broadcast sound in a state where sound pressure in the specific frequency band is decreased than usual, and identifying based on a change of sound pressure in the specific frequency band.

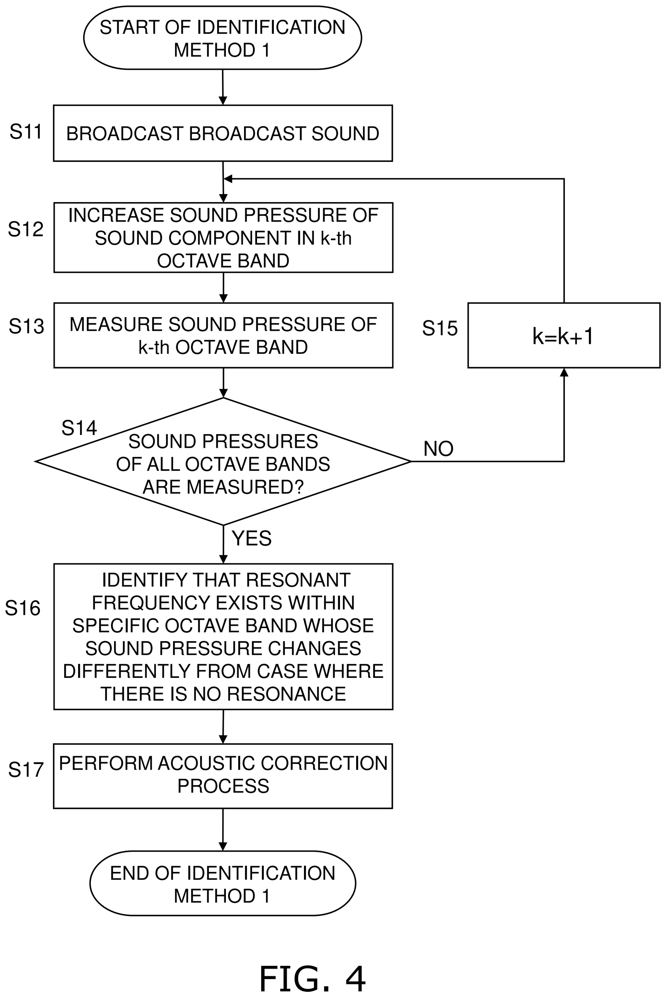

First, with reference to Fig. 4, the resonant frequency identification method according to the method (i) described above (referred to as an identification method 1) is described. Fig. 4 is a flowchart illustrating the resonant frequency identification method according to the identification method 1. In this embodiment, the resonant frequency identification method is performed when the broadcast sound is being broadcasted toward the predetermined space SP. Therefore, first, the broadcast facility 1 of the resonant frequency identification system 100 broadcasts the broadcast sound to the predetermined space SP (Step S11). Specifically, the broadcast facility 1 generates the broadcast sound to be broadcasted toward the predetermined space SP, using sounds from the sound source 3. The broadcast sound generated using sounds from the sound source 3 passes through the mixer 11, the DSP 13, and the amplifier 15 to be output from the speaker 5.

At predetermined timing during broadcasting the broadcast sound toward the predetermined space SP, the arithmetic control unit 137 increases sound pressure of the sound component in the specific octave band included in the broadcast sound to be output to the speaker 5. Specifically, the arithmetic control unit 137 controls the k-th (k = 1, 2, ... n) output adjustment unit 134 (output adjustment unit #k) of the DSP 13 to increase output level of the sound pressure of the broadcast sound that has passed the through k-th bandpass filter unit 132 (bandpass filter unit #k), i.e., the sound component in the k-th octave band of the broadcast sound (the sound component in a frequency range of fₖ to fₖ₊₁) (Step S12).

An increase width of the output level of the sound component in the specific octave band described above can be set to 6 dB or less, for example. In this way, by increasing output level in the specific octave band, it is possible to prevent excessive deterioration of the broadcast sound.

When Step S12 described above is executed, the broadcast sound, in which sound pressure of the sound component in the k-th octave band is increased (i.e., this sound component is enhanced), is broadcasted from the speaker 5 toward the predetermined space SP. The broadcast sound broadcasted toward the predetermined space SP is collected by the broadcast sound collecting microphone 7.

Next, the arithmetic control unit 137 measures sound pressure of the broadcast sound broadcasted toward the predetermined space. The arithmetic control unit 137 measures sound pressure of the sound component in the k-th octave band whose output level is increased, out of the broadcast sound collected by the broadcast sound collecting microphone 7 (Step S13). Specifically, the arithmetic control unit 137 acquires sound pressure of the k-th octave band measured by the k-th sound pressure detection unit 133 (sound pressure detection unit #k), from the k-th sound pressure detection unit 133. The sound pressure acquired from the k-th sound pressure detection unit 133 is buffered by the storage unit 138.

As described later, identifying the resonant frequency using sound pressure of the broadcast sound is performed based on a temporal change of the sound pressure. Therefore, sound pressure of the broadcast sound is acquired as data having a predetermined time length. Specifically, the arithmetic control unit 137 repeatedly acquires sound pressure from the sound pressure detection unit 133 at a predetermined time interval for a plurality of times, so that sound pressures in a predetermined time length can be acquired.

After that, the arithmetic control unit 137 determines whether or not sound pressures of all octave bands of the broadcast sound have been measured (i.e., whether or not k = n is attained) (Step S14). If sound pressures of all octave bands have not been measured, i.e., k < n holds ("No" in Step S14), it is determined to increase output level of the broadcast sound of the next octave band (i.e., a (k+1)th octave band) to measure sound pressure of the next octave band (Step S15), and returns to Step S12.

On the other hand, if sound pressures of all octave bands have been measured, i.e., k = n holds ("Yes" in Step S14), the arithmetic control unit 137 identifies a resonant frequency in the predetermined space SP using the measured sound pressures (Step S16). Specifically, if a change of sound pressure of the measured specific octave band is different from a change of sound pressure in the case where there is no resonance in the predetermined space SP, the arithmetic control unit 137 identifies that a resonant frequency in the predetermined space SP exists within the specific octave band. More specifically, it can be determined whether or not a resonance has occurred in the specific octave band, based on the following criteria.

The rate of attenuation of the sound pressure of the specific octave band is slower in the case where there is a resonant frequency in the specific octave band, than in the case where there is no resonant frequency in the specific octave band. In other words, sounds in an octave band with a resonant frequency are not attenuated for longer period than usual. Therefore, the arithmetic control unit 137 can determine that a resonant frequency exists within the specific octave band, if the rate of attenuation of the sound pressure of the specific octave band is slower than the case where there is no resonance, among sound pressures of a plurality of measured octave bands. The rate of attenuation of the sound pressure can be calculated based on the time period after the sound pressure is detected until the sound pressure is decreased to a predetermined percent of the maximum value, for example. In addition, the rate of attenuation of the sound pressure in the case where there is no resonance can be acquired in advance, after the filter setting data DA is set when the broadcast facility 1 is installed, for example.

Alternatively, when the sound pressure of the specific octave band is increased, if a resonant frequency exists within the specific octave band, the sound pressure of the specific octave band increases with an increase width larger than the increase width of the sound pressure by the output adjustment unit 134. In other words, the sound pressure of the octave band with a resonant frequency is particularly large, and is increased along time depending on the situation. Therefore, the arithmetic control unit 137 can determine that a resonant frequency exists within the specific octave band, if the sound pressure of the specific octave band increases with an increase width larger than the increase width of the sound pressure when the broadcast sound is broadcasted.

Alternatively, if a resonant frequency exists within the specific octave band, the sound pressure of the specific octave band is constantly 0 or has a very small amplitude at a specific position. The position where the sound pressure is 0 or is close thereto corresponds to a position of a "node" of a standing wave generated by resonance. Therefore, the arithmetic control unit 137 can determine that a resonant frequency exists within the specific octave band, if the sound pressure of the specific octave band collected by the broadcast sound collecting microphone 7, which is disposed at any position in the predetermined space SP, is 0 or has a very small amplitude. In addition, it can be identified that a node of a standing wave generated by the resonance exists at the position where the broadcast sound collecting microphone 7 is disposed, which has collected the sound pressure.

On the other hand, if no resonant frequency exists in the specific octave band, the sound pressure of the specific octave band changes in the same manner at any position in the predetermined space SP. Specifically, the sound pressure of the specific octave band is attenuated at the same rate of attenuation at any position in the predetermined space SP.

In addition, if it is determined that a resonance has occurred because the sound pressure of the specific octave band, which was collected by any one of the plurality of broadcast sound collecting microphones 7, increases with an increase width larger than that of the sound pressure when the broadcast sound is broadcasted, the arithmetic control unit 137 can identify that a part of the standing wave other than the node exists at the position of the broadcast sound collecting microphone 7 that has collected the sound pressure.

As described above, by broadcasting the broadcast sound with increased sound pressure of the specific octave band toward the predetermined space SP, a change of the sound pressure of the specific octave band can be highlighted, and hence the change of the sound pressure of the specific octave band becomes clear. As a result, the resonant frequency of the predetermined space SP can be appropriately identified.

After identifying the resonant frequency, the arithmetic control unit 137 performs a process of reflecting the identified resonant frequency on acoustic characteristics of the predetermined space SP (acoustic correction process) (Step S17). In the acoustic correction process, equalizer setting of the broadcast facility 1 is adjusted, based on frequency characteristics of the predetermined space SP and the identified resonant frequency, for example.

Specifically, the arithmetic control unit 137 performs the process of decreasing gain of the frequency band (octave band) including the resonant frequency identified as described above, for the filter setting data DA adjusted in advance in accordance with frequency characteristics of the predetermined space SP to create new filter setting data DA. In this way, the resonance control filter unit 136 of the DSP 13 adjusts output level of the broadcast sound component in accordance with the newly created filter setting data DA, and hence it is possible to suppress an increase in sound pressure of the specific octave band (frequency band including the resonant frequency) due to the resonance. As a result, it is possible to suppress deterioration of broadcast sound in the predetermined space SP.

The frequency characteristics of the predetermined space SP described above indicate which frequency of sound component easily resonates or hardly resonates in the predetermined space SP. For instance, the frequency characteristics are obtained by measuring a sound pressure difference between sound pressure of the sound output from the speaker 5 and sound pressure of the sound collected by the broadcast sound collecting microphone 7, by a predetermined frequency band (octave band) unit (e.g., 1/24 octave band unit). Note that when obtaining the frequency characteristics, if the sound pressure collected by the broadcast sound collecting microphone 7 is a predetermined level or less, the measuring of the sound pressure difference in this frequency band may be skipped.

### 1-5-2. Identification Method 2

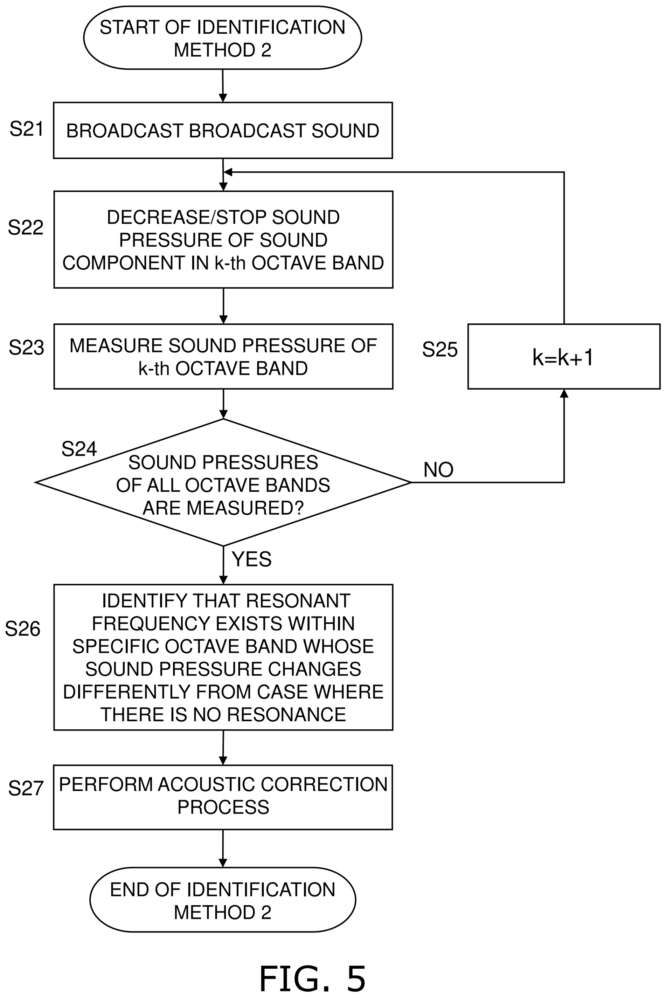

Next, with reference to Fig. 5, described is the above method (ii) of identifying a resonant frequency, i.e., the method of broadcasting the broadcast sound in a state where sound pressure in the specific frequency band is decreased than usual, and identifying a resonant frequency based on a change in sound pressure in the specific frequency band (referred to as an identification method 2). Fig. 5 is a flowchart illustrating the resonant frequency identification method according to the identification method 2.

First, the broadcast facility 1 of the resonant frequency identification system 100 broadcasts the broadcast sound toward the predetermined space SP (Step S21).

At predetermined timing during broadcasting the broadcast sound toward the predetermined space SP, the arithmetic control unit 137 decreases sound pressure of the specific octave band of the sound component included in the broadcast sound, or stops outputting the sound component in the specific octave band (Step S22). Specifically, the arithmetic control unit 137 controls the k-th output adjustment unit 134 (output adjustment unit #k) of the DSP 13 to decrease output level of the sound pressure of the broadcast sound that has passed through the k-th bandpass filter unit 132 (bandpass filter unit #k), i.e., the k-th octave band of the broadcast sound, or to stop outputting the sound component of the k-th octave band.

When Step S22 described above is performed, the broadcast sound, in which sound pressure of the sound component in the k-th octave band is decreased or 0 (i.e., this sound component is weakened), is broadcasted toward the predetermined space SP. This broadcast sound is collected by the broadcast sound collecting microphone 7.

Next, the arithmetic control unit 137 measures sound pressure of the sound component of the k-th octave band whose output level is decreased or output is stopped, among broadcast sounds collected by the broadcast sound collecting microphone 7 (Step S23). Specifically, the arithmetic control unit 137 acquires sound pressure of the k-th octave band measured by the k-th sound pressure detection unit 133 (sound pressure detection unit #k), from the k-th sound pressure detection unit 133.

After that, the arithmetic control unit 137 determines whether or not sound pressures of all octave bands have been measured (Step S24). If sound pressures of all octave bands have not been measured ("No" in Step S24), it is determined to decrease output level of the broadcast sound of the next octave band (i.e., a (k+1)th octave band) to measure sound pressure of the next octave band (Step S25), and returns to Step S22.

On the other hand, if sound pressures of all octave bands have been measured ("Yes" in Step S24), the arithmetic control unit 137 identifies a resonant frequency of the predetermined space SP using the measured sound pressures (Step S26). Specifically, it can be determined whether or not a resonance has occurred in the specific octave band, based on the following criteria.

When sound pressure of the specific octave band is decreased, the arithmetic control unit 137 can determine that a resonance has occurred if the rate of attenuation of the sound pressure of the specific octave band is slower than in the case where there is no resonance. On the other hand, if the sound pressure of the specific octave band is decreased at the same rate of attenuation as in the case where there is no resonance, it can be determined that a resonance having a resonant frequency in the specific frequency band has not occurred.

As described above, by broadcasting the broadcast sound with decreased sound pressure of the specific octave band or the broadcast sound in which output of the sound component in the specific octave band is stopped, toward the predetermined space SP, a change of the sound pressure of the specific octave band can be highlighted, and hence the change of the sound pressure of the specific octave band becomes clear. As a result, the resonant frequency of the predetermined space SP can be appropriately identified.

In addition, in the case where sound pressure of the specific octave band is increased, if a resonance occurs in the specific octave band, the sound pressure continues to increase so that acoustic feedback phenomenon may occur. In contrast, in the case where sound pressure is decreased, continuous increase of the sound pressure is suppressed, and occurrence of acoustic feedback phenomenon can be prevented.

After identifying the resonant frequency, the arithmetic control unit 137 performs the acoustic correction process based on the identified resonant frequency (Step S27). Specifically, the arithmetic control unit 137 performs the process of decreasing gain of the frequency band (octave band) including the identified resonant frequency, for the filter setting data DA adjusted in advance in accordance with frequency characteristics of the predetermined space SP, so as to create the new filter setting data DA.

### 2. Other Embodiment

The embodiments are described above as examples of technique disclosed in this application. However, the technique in the present disclosure is not limited to this, but can be applied also to embodiments with appropriate modification, replacement, addition, omission, or the like. In addition, it is also possible to make a new embodiment by combining configuration elements described above in the embodiment.
(1) In identification of the resonant frequency in Embodiment 1, the identification method described above is executed repeatedly for a relatively long period (e.g., one day), and the resonant frequencies identified by the repeated execution are averaged to determine the final resonant frequency. However, this is not a limitation. In a case where the resonant frequency is temporarily changed in a short period (e.g., a period while an assembly is being held in a school) and it is necessary to identify the resonant frequency in the short period, it may be also possible to set the resonant frequency identified by performing the identification method described above once or a few times, as the resonant frequency of the predetermined space SP.
(2) It may be possible to stop outputting the sound component in the specific octave band from one of the plurality of speakers 5, and to identify a resonant frequency exists within the specific octave band, if the rate of attenuation of the sound pressure of the specific octave band is slower than the rate of attenuation in the case where there is no resonance.
(3) It may be possible not to measure sound pressure of the broadcast sound for each predetermined octave band, but to measure sound pressure of the entire broadcast sound, and to identify the resonant frequency based on the sound pressure of the entire broadcast sound. Specifically, the switch unit 131c of the DSP 13 is set to ON state, the sound pressure detection unit A measures the sound pressure of the entire broadcast sound, and the arithmetic control unit 137 acquires the sound pressure measured by the sound pressure detection unit A. In this case, the arithmetic control unit 137 can identify that a resonant frequency exists within the specific octave band, if frequency characteristics of the measured sound pressure of the entire broadcast sound is different from frequency characteristics of the broadcast sound input from the mixer 11, and if there is a phenomenon such that the measured rate of attenuation of the sound pressure of the specific octave band is slow, or that the sound pressure is gradually increased, or the like, for example.
(4) In Embodiment 1, predetermined sound pressure of the broadcast sound of the sound component is increased or decreased for each octave band, and resonant frequency is identified based on a change in the sound pressure of the predetermined octave band. However, this is not a limitation. In a case where sound pressure of a certain specific octave band is hardly detected in the predetermined space SP or in other case, measuring of the sound pressure of the specific octave band and identifying of the resonant frequency may be skipped.
(5) It may be possible to dispose another sensor in the predetermined space SP where the speaker 5 is installed, separately from the broadcast sound collecting microphone 7, and to predict a change of the resonant frequency based on information obtained from the sensor. This sensor is, for example, a temperature sensor, a humidity sensor, a camera that takes a picture of the predetermined space SP, or the like.
   Sound speed in the predetermined space SP changes in accordance with temperature/humidity of the predetermined space SP. The change of sound speed causes a change of the resonant frequency of the predetermined space SP. In other words, when temperature/humidity of the predetermined space SP changes, the resonant frequency of the predetermined space SP also changes. Therefore, for example, a picture of state of people in the predetermined space SP is taken using a camera disposed separately from the broadcast sound collecting microphone 7, and based on the taken picture of the state of people it is predicted that an increase in the number of people causes an increase in temperature/humidity of the predetermined space SP, and based on this prediction it can be estimated whether or not the resonant frequency will change.
(6) It may be possible to generate a learning model that input information obtained from a sensor disposed separately from the broadcast sound collecting microphone 7, and outputs the resonant frequency when the information is obtained. In this way, the resonant frequency of the predetermined space SP can be easily identified from the information obtained from the sensor.
   The resonant frequency identification method described above in Embodiment 1 or the like can be used when generating training data of the learning model described above. Specifically, for example, when predetermined information is obtained from the sensor, the resonant frequency identification method described above is performed to identify the resonant frequency when the information is obtained, and hence the training data can be created in which the input is the obtained sensor information, and the output is the identified resonant frequency when the information is obtained.
(7) The collection of the broadcast sound by the broadcast sound collecting microphone 7 may be performed using one of the plurality of broadcast sound collecting microphones 7, or may be performed using the whole or some of the plurality of broadcast sound collecting microphones 7. If the plurality of broadcast sound collecting microphones 7 are used, it may be also possible, for example, to collect the broadcast sound by one specific broadcast sound collecting microphone 7 to identify the resonant frequency using the identification method described above, and then to collect the broadcast sound by another broadcast sound collecting microphone 7 to identify the resonant frequency using the identification method described above. In this way, it is possible to identify the resonant frequency using the broadcast sounds at a plurality of places. Therefore, even if the resonant frequency cannot be identified using the broadcast sound collected by one broadcast sound collecting microphone 7, the resonant frequency can be identified using the broadcast sound collected by another broadcast sound collecting microphone 7. In this way, by using the plurality of broadcast sound collecting microphones 7 to collect the broadcast sound, the resonant frequency can be identified more securely.

### 3. Features of Present Disclosure

Features of the present disclosure can be expressed as follows.
(1) The resonant frequency identification method of the present disclosure includes:
   broadcasting a broadcast sound toward a predetermined space (e.g., the predetermined space SP) whose resonant frequency is to be identified (e.g., Step S11, S21);
   measuring sound pressure of the broadcast sound broadcasted toward the predetermined space (e.g., Steps S12 to S15, S22 to S25); and
   identifying that a resonant frequency in the predetermined space exists within a specific frequency band, if a change of the measured sound pressure in the specific frequency band is different from a change of sound pressure in the case where there is no resonance in the predetermined space (e.g., Step S16, S26).
   In the resonant frequency identification method described above, the resonant frequency is identified using the broadcast sound that is broadcasted toward the predetermined space in an ordinary use, and hence it is possible to appropriately identify the resonant frequency of the predetermined space when the broadcast sound is actually broadcasted.
(2) In the resonant frequency identification method (1) described above, identifying the resonant frequency may include identifying that the resonant frequency in the predetermined space exists within the specific frequency band, if a rate of attenuation of the measured sound pressure in the specific frequency band is slower than a rate of attenuation of sound pressure in the case where there is no resonance in the predetermined space. In this way, based on characteristics that sound pressure with a resonance generated is attenuated more slowly than the case where there is no resonance, the resonant frequency can be identified more correctly.
(3) In the resonant frequency identification method (1) or (2) described above, broadcasting the broadcast sound may include increasing sound pressure in the specific frequency band included in the broadcast sound, to broadcast the broadcast sound (e.g., Step S12). In this way, a change of the sound pressure in the specific frequency band can be highlighted, and hence the change of the sound pressure in the specific frequency band becomes clear. As a result, the resonant frequency of the predetermined space can be appropriately identified.
(4) In the resonant frequency identification method (3) described above, identifying the resonant frequency may include identifying that the resonant frequency in the predetermined space exists within the specific frequency band, if the measured sound pressure in the specific frequency band increases with an increase width larger than that of the sound pressure when the broadcast sound is broadcasted. In this way, based on characteristics that sound pressure with a resonance generated becomes particularly large, the resonant frequency can be correctly identified.
(5) In the resonant frequency identification method of any one of (1) to (4) described above, identifying the resonant frequency may include identifying that the resonant frequency in the predetermined space exists within the specific frequency band, if the measured sound pressure in the specific frequency band is zero or very small. In this way, based on characteristics that sound pressure becomes zero or has small amplitude at a part of a "node" of a standing wave generated by resonance, the resonant frequency can be correctly identified.
(6) In the resonant frequency identification method (5) described above, identifying the resonant frequency may include identifying that a node of a standing wave generated by resonance exists at a place where the measured sound pressure in the specific frequency band is zero or small. In this way, based on characteristics that sound pressure becomes zero or has small amplitude at a part of a "node" of a standing wave generated by resonance, a position of a "node" of a standing wave can be correctly identified.
(7) In the resonant frequency identification method (1) or (2) described above, broadcasting the broadcast sound may include decreasing sound pressure in the specific frequency band included in the broadcast sound, to broadcast the broadcast sound (e.g., Step S22). In this way, a change of the sound pressure in the specific frequency band can be highlighted, and hence the change of the sound pressure in the specific frequency band becomes clear. As a result, the resonant frequency of the predetermined space can be appropriately identified. In addition, if the sound pressure is decreased, continuous increase in the sound pressure due to resonance is suppressed, and it is possible to prevent occurrence of acoustic feedback phenomenon.
(8) In the resonant frequency identification method of any one of (1) to (7) described above, measuring sound pressure of the broadcast sound may include measuring sound pressure of the broadcast sound at a plurality of positions in the predetermined space. By collecting the measured sound pressure at a plurality of positions, a resonance can be detected more securely. In other words, the resonant frequency can be identified more securely.
(9) In the resonant frequency identification method of any one of (1) to (8) described above, measuring sound pressure of the broadcast sound may include measuring sound pressure of the broadcast sound for each predetermined frequency band. In this way, the resonant frequency can be easily identified.
(10) The resonant frequency identification method of any one of (1) to (9) described above may further include performing acoustic correction of the broadcast sound, not to cause resonance in the predetermined space, based on the identified resonant frequency (e.g., Step S17, S27). In this way, an increase in sound pressure in the frequency band including the resonant frequency due to resonance is suppressed, and hence it is possible to prevent deterioration of sound quality of the broadcast sound in the predetermined space.
(11) A program of the present disclosure causes a computer to perform the resonant frequency identification method of any one of (1) to (10) described above.
(12) A resonant frequency identification system of the present disclosure (e.g., the resonant frequency identification system 100) includes a broadcast facility (e.g., the broadcast facility 1), a speaker (e.g., the speaker 5), and a broadcast sound collecting microphone (e.g., the broadcast sound collecting microphone 7). The broadcast facility is a facility configured to broadcast a broadcast sound toward the predetermined space. The speaker is disposed in the predetermined space, to broadcast the broadcast sound output from the broadcast facility toward the predetermined space. The broadcast sound collecting microphone collects the broadcast sound broadcasted toward the predetermined space.

In the resonant frequency identification system described above, during broadcasting the broadcast sound from the speaker toward the predetermined space, the broadcast facility measures sound pressure of the broadcast sound collected by the broadcast sound collecting microphone. If a change of the measured sound pressure in a specific frequency band is different from a change in sound pressure in the case where there is no resonance in the predetermined space, the broadcast facility identifies that a resonant frequency in the predetermined space exists within the specific frequency band.

In the resonant frequency identification system described above, the resonant frequency is identified using the broadcast sound broadcasted from the audio facility toward the predetermined space in an ordinary use, and hence the resonant frequency of the predetermined space when the broadcast sound is actually broadcasted can be appropriately identified.

### REFERENCE SIGNS LIST

100 resonant frequency identification system
1 broadcast facility
3 sound source
5 speaker
7 broadcast sound collecting microphone
11 mixer
13 DSP
131a to 131e switch unit
132 bandpass filter unit
133, A sound pressure detection unit
134, B output adjustment unit
135 adder unit
136 resonance control filter unit
137 arithmetic control unit
138 storage unit
DA filter setting data
T1 octave band setting table
15 amplifier
SP predetermined space

## Claims

1. A resonant frequency identification method of identifying a resonant frequency of a predetermined space, the method comprising:
broadcasting a broadcast sound toward the predetermined space;
measuring sound pressure of the broadcast sound broadcasted toward the predetermined space; and
identifying that a resonant frequency in the predetermined space exists within a specific frequency band, if a change of the measured sound pressure in the specific frequency band is different from a change of sound pressure in a case where there is no resonance in the predetermined space.

2. The resonant frequency identification method according to claim 1, wherein identifying the resonant frequency includes identifying that the resonant frequency in the predetermined space exists within the specific frequency band, if a rate of attenuation of the measured sound pressure in the specific frequency band is slower than a rate of attenuation of sound pressure in the case where there is no resonance in the predetermined space.

3. The resonant frequency identification method according to claim 1, wherein broadcasting the broadcast sound includes broadcasting the broadcast sound by increasing sound pressure in the specific frequency band included in the broadcast sound.

4. The resonant frequency identification method according to claim 3, wherein identifying the resonant frequency includes identifying that the resonant frequency in the predetermined space exists within the specific frequency band, if the measured sound pressure in the specific frequency band increases with an increase width larger than that of the sound pressure when the broadcast sound is broadcasted.

5. The resonant frequency identification method according to claim 3, wherein identifying the resonant frequency includes identifying that the resonant frequency in the predetermined space exists within the specific frequency band, if the measured sound pressure in the specific frequency band is zero or small.

6. The resonant frequency identification method according to claim 5, wherein identifying the resonant frequency includes identifying that a node of a standing wave generated by resonance exists at a place where the measured sound pressure in the specific frequency band is zero or small.

7. The resonant frequency identification method according to claim 2, wherein broadcasting the broadcast sound includes broadcasting the broadcast sound by decreasing sound pressure in the specific frequency band included in the broadcast sound.

8. The resonant frequency identification method according to claim 1, wherein measuring sound pressure of the broadcast sound includes measuring sound pressure of the broadcast sound at a plurality of positions in the predetermined space.

9. The resonant frequency identification method according to claim 1, wherein measuring sound pressure of the broadcast sound includes measuring sound pressure of the broadcast sound for each predetermined frequency band.

10. The resonant frequency identification method according to claim 1, further comprising performing acoustic correction of the broadcast sound not to cause resonance in the predetermined space, based on the identified resonant frequency.

11. A program causing a computer to perform the resonant frequency identification method according to any one of claims 1 to 10.

12. A resonant frequency identification system configured to identify a resonant frequency of a predetermined space, comprising:
a broadcast facility configured to broadcast a broadcast sound toward the predetermined space;
a speaker disposed in the predetermined space and configured to broadcast the broadcast sound output from the broadcast facility toward the predetermined space; and
a broadcast sound collecting microphone configured to collect the broadcast sound broadcasted toward the predetermined space, wherein
during broadcasting the broadcast sound from the speaker toward the predetermined space, the broadcast facility measures sound pressure of the broadcast sound collected by the broadcast sound collecting microphone, and
if a change of the measured sound pressure in a specific frequency band is different from a change of sound pressure in a case where there is no resonance in the predetermined space, the broadcast facility identifies that a resonant frequency in the predetermined space exists within the specific frequency band.
